# EUROPÄISCHE PATENTSCHRIFT

(11) **EP 3 762 567 B1**
(45) Veröffentlichungstag und Bekanntmachung des Hinweises auf die Patenterteilung: **24.08.2022**
(21) Anmeldenummer: 19716767.9
(22) Anmeldetag: 04.03.2019
(51) Int. Cl.: E04G 11/48, E04G 17/16, E01D 21/00, E04G 13/06, E04G 5/06, E01D 21/06, E04G 25/04

(54) **ABSENKEINRICHTUNG SOWIE STÜTZVORRICHTUNG UND DECKENSCHALUNG MIT EINER SOLCHEN ABSENKEINRICHTUNG**
LOWERING SYSTEM AND SUPPORT DEVICE, AND CEILING FORMWORK HAVING SUCH A LOWERING SYSTEM
DISPOSITIF D'ABAISSEMENT AINSI QUE DISPOSITIF DE SUPPORT ET COFFRAGE DE PLAFOND DOTÉ D'EN TEL DISPOSITIF D'ABAISSEMENT

(30) Priorität: 09.03.2018 DE 102018203612
(43) Veröffentlichungstag der Anmeldung: 13.01.2021
(73) Patentinhaber: PERI SE, 89264 Weißenhorn (DE)
(72) Erfinder: STURM, Florian, 89299 Unterroth (DE)
(74) Vertreter: K & H Bonapat Patentanwälte Koch · von Behren & Partner mbB
(86) Internationale Anmeldenummer: PCT/DE2019/100191
(87) Internationale Veröffentlichungsnummer: WO 2019/170192

(56) Entgegenhaltungen:
- GB-A- 1 102 423
- GB-A- 2 344 609
- KR-A- 20070 001 483

## Beschreibung

Die Erfindung betrifft eine Absenkeinrichtung für den Baubereich, insbesondere zum Absenken von Deckenschalungen beim Ausschalen einer Bauwerksdecke. Die Absenkeinrichtung weist einen Hubkolben und eine Stützbasis sowie eine Arretiervorrichtung auf, wobei der Hubkolben in der Stützbasis verschiebbar gelagert ist und von einer herausgeschobenen Position in eine Absenkposition in die Stützbasis einschiebbar ist. Der Hubkolben ist mittels der Arretiervorrichtung in der herausgeschobenen Position arretierbar. Die Erfindung betrifft darüber hinaus eine Stützvorrichtung sowie eine Deckenschalung mit einer solchen Absenkeinrichtung.

Zum Betonieren von Gebäudeteilen, z. B. Bauwerksdecken, wird deren Form zunächst durch eine die Oberfläche des Gebäudeteils abbildende Schalhaut vorgegeben. Die Schalhaut ist üblicherweise durch Schalungselemente in Form von einfachen Schalungsplatten oder sogenannten Rahmenschalungselementen gebildet, die In der Regel einen Stahl- oder Aluminiumrahmen aufweisen.

Im Falle von Bauwerksdecken wird die Schalhaut mittels Unterstützungselementen bzw. Stützvorrichtungen abgestützt. Derlei Stützvorrichtungen können beispielsweise Baustützen, die häufig als Teleskopsteher ausgeführt sind, Traggerüste und/oder Konsolen sein. Nach dem Betonieren steht die von den Schalungselementen und den Stützvorrichtungen ausgebildete Deckenschalung unter Last, d. h. das Gewicht der Bauwerksdecke ist auf die Bauwerksdeckenschalung, insbesondere die Stützvorrichtung(en), abgestützt. Beim Ausschalen der zumindest teilweise ausgehärteten Bauwerksdecke. d. h. beim Entfernen der Bauwerksdeckenschalung nach dem Abbinden des Betons der Bauwerksdecke. führt diese Belastung dazu, dass die Teile der Bauwerksdeckenschalung nur sehr schwer zu lösen sind. Um dies zu vermeiden Ist es bekannt, Absenkeinrichtungen in die Stützvorrichtungen zu integrieren, die es ermöglichen, die Schalungselemente durch Betätigen eines Ausschalmechanismus der Absenkeinrichtungen einige Zentimeter von der Oberfläche der Bauwerksdecke abzusenken, damit der Auflagedruck auf den Unterstützungselementen entfällt.

Zum Schnellabsenken von Betonschalungen unter Last sollte das Betätigen (Lösen) der Absenkeinrichtung annähernd lastfrei, d. h. ohne Kraftaufwand, möglich sein. Bei gattungsgemäßen Absenkeinrichtungen ist die Arretiervorrichtung ähnlich einem Teleskopsteher z. B. von einem Bolzen oder einem Keil ausgebildet, die den Hubkolben in der Arbeitsposition fixiert, d. h. dessen Verschiebbarkeit in der Stützbasis behindert. Der Hubkolben ist dabei über den Bolzen oder den Keil auf der Stützbasis abgestützt. Zum Lösen des Ausschalmechanismus wird der Keil oder der Bolzen gelöst, d. h. entfernt, so dass die Verschiebbarkeit des Hubkolbens wiederhergestellt ist, Der Hubkolben kann dadurch - der Schwerkraft folgend - selbsttätig aus der Arbeitsposition in die Absenkposition überführt werden.

Nach dem Betonieren und Abbinden der Bauwerksdecke herrscht allerdings ein hoher Auflagedruck der Schalung und der Bauwerksdecke auf dem zu lösenden Bolzen oder Keil, wodurch deren Entfernen aus ihrer den Hubkolben fixierenden Funktionsstellung in der Regel sehr schwergängig ist und einen sehr großen Kraftaufwand erfordert. So ist z. B. das beim Ausschalen der Deckenschalung notwendige Lösen der Unterstützungselemente beim Absenken der Deckenschalung relativ schwer zu bewerkstelligen. Ohne Hilfsmittel, wie z. B. Hammerschläge, Hebel oder eine mobile Hydraulik, ist das Aktivieren des Absenkmechanismus der bekannten Absenkeinrichtungen in der Regel nicht möglich. Unkontrollierte Hammerschläge beim Lösen der Unterstützungselemente können zu Funktionseinschränkungen und ggf. sogar zu einem frühzeitigem Bauteilversagen (Verschleiß) führen. Der durchzuführende Lösevorgang der Unterstützungselemente, bevor im Anschluss vollständig ausgeschalt werden kann, führt deshalb in aller Regel zu einem erheblichen Personal- und Zeitaufwand. Es ist deshalb die Aufgabe der Erfindung, eine Absenkeinrichtung, eine Stützvorrichtung sowie auch eine Deckenschalung bereitzustellen, die die Nachteile des Standes der Technik verringern, wobei insbesondere ein möglichst leichtgängiges und zügiges Absenken, d. h. Ausschalen, von belasteten Deckenschalungen ermöglicht werden soll. Das Dokument KR20070001483A offenbart eine Absenkeinrichtung nach dem Oberbegriff des Anspruchs 1.

Die die Absenkeinrichtung betreffende Aufgabe wird erfindungsgemäß durch eine Absenkeinrichtung gemäß Anspruch 1 gelöst. Die erfindungsgemäße Stützvorrichtung ist in Anspruch 15 angegeben. Die erfindungsgemäße Deckenschalung weist die in Anspruch 17 angegebenen Merkmale auf. Vorteilhafte Weiterbildungen der Erfindung sind in den abhängigen Ansprüchen sowie in der Beschreibung angegeben.

Die erfindungsgemäße Absenkeinrichtung ist insbesondere für Stützvorrichtungen im Baubereich sowie zum Absenken von Deckenschalungen beim Ausschalen einer Bauwerksdecke geeignet. Die Absenkeinrichtung weist einen, insbesondere einenends einen Stützkopf ausbildenden, Hubkolben und eine Stützbasis sowie eine Arretiervorrichtung auf. Der Hubkolben ist in der Stützbasis verschiebbar gelagert und von einer herausgeschobenen Abstütz- oder Arbeitsposition in eine Absenkposition in die Stützbasis einschiebbar und mittels der Arretiervorrichtung in der herausgeschobenen Arbeitsposition arretierbar,

Erfindungsgemäß weist die Arretiervorrichtung ein Drehlager und einen Exzenterhebel auf, wobei der Exzenterhebel in dem Drehlager drehbar befestigt ist und der Hubkolben und die Stützbasis in der Arbeitsposition über den Exzenterhebel gegeneinander abgestützt sind. Durch das gegeneinander Abstützen kann der Hubkolben in seiner aus der Stützbasis ausgerückten Position, d. h. seiner Vorhubposition arretiert werden. Bei einem Exzenterhebel liegt der Schwerpunkt des Hebels außerhalb der Drehachse des Drehlagers des Hebels. In der Arbeitsposition ist der Exzenterhebel derart positioniert, dass dessen Schwerpunkt zwischen der Drehachse des Drehlagers und dem Hubkolben positioniert ist. Derart befindet sich z. B. der Hubkolben, der über, d. h. auf dem Exzenterhebel aufgestützt ist, in einem labilen Gleichgewicht. Ein labiles Gleichgewicht kann durch eine nur geringe Auslenkung zerstört werden. Entsprechend kann der Hubkolben auch unter Belastung mit nur geringem Kraftaufwand durch Wegdrehen des Exzenterhebels in die Absenkposition verschoben werden. Das Drehlager kann sowohl an der Stützbasis ausgeformt sein als auch an dem Hubkolben. Entsprechend kann der Exzenterhebel sowohl an der Stützbasis als auch an dem Hubkolben drehbar befestigt sein. Der Exzenterhebel kann z. B. ähnlich einer Nocke einer Nockenwelle ausgeformt sein. Eine derartige Nocke kann in der Arbeitsposition auf einen in Nockenrichtung, z. B. entsprechend einer Kugeloberfläche, aufgewölbten Abstützbereich abgestützt sein. Durch die Verwendung einer erfindungsgemäßen Absenkeinrichtung ist derart ein leichtgängiges und schnelles Aktivieren der Absenkeinrichtung unter Last und mithin ein Absenken von belasteten Deckenschalungen möglich.

Durch die Ausbildung der erfindungsgemäßen Absenkeinrichtung mit einem einen Stützkopf aufweisenden Hubkolben entsprechend einem Teleskopständer ist die erfindungsgemäße Absenkeinrichtung leicht in verschiedenste Unterstützungselemente bzw. Stützvorrichtungen integrierbar oder an diese ankoppelbar. Die erfindungsgemäße Absenkeinrichtung hat ein einfaches Wirkprinzip, das sich auf eine Vielzahl von Unterstützungselementen anwenden lässt. Sie ermöglicht eine deutliche Zeitersparnis beim Ausschalen von Betondecken und hat somit einen positiven Kosteneffekt. Durch den geringen Kraftaufwand ergibt sich als Handhabungsvorteil, dass kein oder ein nur geringer Hilfsmitteleinsatz beim Ausschalen notwendig ist und die Möglichkeit ohne vorherigen Lösevorgang unter Last auszuschalen.

Vorteilhaft ist der Exzenterhebel über das Drehlager an der Stützbasis drehbar befestigt. Auf dem Hubkolben lastende Kräfte werden dabei über das Drehlager auf die Stützbasis übertragen. An der Stützbasis kann das Drehlager durch eine einfache Bohrung ähnlich einem Gleitlager ausgeführt sein.

Gemäß der Erfindung ist an dem Exzenterhebel ein Pleuelelement beweglich befestigt, wobei der Hubkolben über das Pleuelelement und den Exzenterhebel mit der Stützbasis beweglich verbunden ist. Pleuelelement und Exzenterhebel bilden dabei einen Kniestock oder Kniehebel aus. Der Exzenterhebel kann über das Pleuelelement mit dem Hubkolben beweglich verbunden sein, Der Hubkolben und der Exzenterhebel müssen sich also in der Arbeitsposition nicht direkt berühren. Das aufeinander Abstützen kann z. B. über das Pleuelelement indirekt erfolgen. Derart wird der Extenterhebel automatisch beim Herausschieben des Hubkolbens aus der Stützbasis in die Arbeitsposition in eine Position gebracht, in der dessen Schwerpunkt zwischen der Drehachse des Drehlagers und dem Hubkolben positioniert ist. Derart ist eine besonders einfache Handhabung der Absenkeinrichtung beim Aufbau einer Deckenschalung möglich,

Wenn in dem Drehlager eine, insbesondere bolzenförmige, Stützwelle gelagert ist, wobei der Exzenterhebel mit der Stützwelle eine Kurbelwelle ausbildet, ist ein vergrößerter Hubweg zwischen Arbeitsposition und Absenkposition des Hubkolbens erreichbar. Bei der Kurbelwelle sind die Stützwelle und der Exzenterhebel zweigeteilt, wobei das Pleuelelement zwischen den beiden Teilen des Exzenterhebels drehbar befestigt ist. Die Bolzenförmigkeit der Stützwelle führt zu einer besonders stabilen Ausführung der Arretiervorrichtung, so dass hohe Stützlasten abgeleitet werden können.

In einer besonders vorteilhaften Ausführungsform der erfindungsgemäßen Absenkeinrichtung weist die Arretiervorrichtung eine Exzenterhebelhaltevorrichtung auf. Mittels dieser Haltevorrichtung kann die Stellung des Exzenterhebels bei Positionierung des Hubkolbens in Arbeitsposition gehalten werden. Derart kann ein versehentliches Verschieben des Hubkolbens in die Absenkposition durch unabsichtliches Zerstören des labilen Gleichgewichtes des auf den Exzenterhebel abgestützten Hubkolbens vermieden werden. Die Exzenterhebelhaltevorrichtung kann sehr leichtgängig gelöst werden. da keine direkte Last von der Deckenschalung auf die Exzenterhebelhaltevorrichtung einwirkt.

Sehr einfach kann die Exzenterhebelhaltevorrichtung einen Schieber und/oder einen Bolzen aufweisen. Der Schieber und/oder Bolzen kann derart neben dem Exzenterhebel und/oder dem Pleuel angeordnet sein, dass diese in ihrer Bewegungsfreiheit durch Drehen des Exzenterhebels in dem Drehlager gehindert werden. Die Arbeitsposition kann derart nur durch Entfernen des Bolzens oder Verschieben des Schiebers verlassen werden.

Der Schieber kann vorteilhaft einen keilförmigen Endbereich zum Verdrehen des Exzenterhebels in dem Drehlager aufweisen, Derart kann, zusätzlich zur Freigabe der Beweglichkeit des Exzenterhebels, das labile Gleichgewicht in dem sich der Hubkolben in Arbeitsposition befindet, durch Verschieben des Schiebers zerstört werden.

Wenn die Exzenterhebelhaltevorrichtung eine Rückstellfeder aufweist, wobei der Schieber mittels der Rückstellfeder an der Stützbasis befestigt ist, kann der Schieber selbsttätig in eine die Beweglichkeit des Exzenterhebels arretierende Position gedrückt werden, wenn der Hubkolben in die Arbeitsposition verschoben wird,

Vorteilhaft weist der Schieber eine Sichtmarkierung zur Unterscheidung der Absenkposition von der Arbeitsposition auf. Derart kann die den Exzenterhebel arretierende Position des Schiebers auch bei Ausführung der Stützbasis als geschlossenes Gehäuse sicher geprüft werden. Zum einfachen Verschieben des Schiebers kann dieser eine Werkzeugeingriffsnut aufweisen.

Die Absenkeinrichtung kann insgesamt aus Metall bestehen. Nach einer alternativen Ausführungsform besteht die Absenkeinrichtung zumindest teilweise, bevorzugt größtenteils, ganz bevorzugt insgesamt, aus Kunststoff oder einem Verbundwerkstoff, Als Verbundwerkstoff kommen insbesondere Faserverbundwerkstoffe mit oder ohne Armierungseinlagen aus Metall in Betracht.

Sofern die Absenkeinrichtung nur einen Hub (Absenkstrecke) von wenigen Millimetern aufweisen muss, kann die Absenkeinrichtung besonders kompakt ausgeführt werden. Dadurch kann deren Integration in oder Ankopplung an Stützvorrichtungen, beispielsweise Baustützen oder Traggerüste, nochmals weiter vereinfacht werden.

Die Stützbasis und/oder der Hubkolben können zu deren besseren Montage jeweils einenends einen Stützkopf ausbilden, bevorzugt wobei der Stützkopf eine Rolle aufweist. Durch eine solche Rolle eignet sich die erfindungsgemäße Absenkeinrichtung insbesondere zum Einsatz in Deckenschalungen für die Unterseite einer Fahrbahnplatte. Wenn die Absenkeinrichtung Anschlagnoppen, insbesondere zwischen Stützbasis und Stützkopf des Hubkolbens, aufweist, kann ein Aufschlagen des Stützkopfes auf der Stützbasis beim Absenken der Deckenschalung gedämpft werden. Liegt der Stützkopf an den Anschlagnoppen an, so ist dadurch zwischen dem Stützkopf und der Stützbasis ausgebildet, der als Werkzeugeingriff für ein Hebelwerkzeug dienen kann. Dadurch kann der Hubkolben im Falle des Falles vereinfacht in seine ausgerückte (Vorhub-)Position bewegt werden.

Die Stützbasis kann eine Ausschiebefeder aufweisen, wobei der Hubkolben mittels der Ausschiebefeder in die Arbeitsposition gedrückt wird. Derart wird beispielsweise der Aufbau einer Deckenschalung mit einer erfindungsgemäßen Absenkeinrichtung erleichtert,

Nach der Erfindung kann die Absenkeinrichtung ein von außen zugängliches bzw. betätigbares Betätigungsmittel aufweisen, durch das die Absenkeinrichtung aktivierbar, d. h. das Absenken /Einschieben des Hubkolbens in die Stützbasis auslösbar ist. Das Betätigungsmittel kann insbesondere als eine Schlagplatte oder als ein Schlagknopf ausgebildet sein, der vorzugswiese in einer zur Längsachse der Absenkreinrichtung radialen Richtung bewegbar ist. Dadurch kann die Handhabung der Absenkeinrichtung nochmals weiter vereinfacht werden.

Die erfindungsgemäße Stützvorrichtung ist für den Einsatz im Baubereich, insbesondere zum Abstützen einer Deckenschalung, vorgesehen. Erfindungsgemäß zeichnet sich die Stützvorrichtung durch zumindest eine vorstehend erläuterte Absenkeinrichtung aus. Die vorstehend im Zusammenhang mit der Absenkeinrichtung gemachten Ausführungen gelten dementsprechend auch für die Stützvorrichtung. Die Stützvorrichtung kann so insgesamt zu verringerten Baukosten im Baugewerbe beitragen.

Nach der Erfindung kann die Stützvorrichtung eine Baustütze, insbesondere eine Schwerlaststütze, ein Traggerüst, insbesondere in Form eines Tragturms, eine Konsole oder eine dem mit der Entwicklung von Tragkonstruktionen im Baubereich betrauten Fachmann geläufige andere Tragvorrichtung sein.

Die Absenkeinrichtung kann nach der Erfindung beispielsweise als eine (kopfseitige) Verlängerung und/oder als Stützsockel einer Baustütze/Schwerlaststütze montiert sein. Zur Befestigung der Absenkeinrichtung an einer solchen Stütze kann beispielsweise ein Steck- und/oder Schraubanschluss dienen.

Besonders bevorzugt ist die Absenkeinrichtung zumindest abschnittsweise als ein integraler Bestandteil der Stützvorrichtung ausgeführt. So kann beispielsweise ein Rohrprofil der Baustütze oder des Traggerüsts die Stützbasis der Absenkeinrichtung bilden. Die Absenkmechanik ist so innerhalb des Außenrohrs geschützt angeordnet. Ist die Stützvorrichtung in Form eines Gerüsts oder Tragturms ausgeführt, so kann die Stützvorrichtung mit mehreren Absenkeinrichtungen versehen sein.

Eine erfindungsgemäße Deckenschalung weist eine erfindungsgemäße Absenkeinrichtung und ein Schalhautelement auf, wobei das Schalhautelement mittels der Absenkeinrichtung, insbesondere durch deren Hubkolben, abgestützt ist. Eine derartige Deckenschalung kann beim Ausschalen der damit verschalten Bauwerksdecke sicher und schnell abgesenkt werden.

Wenn das Schalhautelement eine Unterseite einer Fahrbahnplatte ausformt, und die Absenkeinrichtung in einer Fahrbahnplattenkonsole angeordnet ist, kann mittels der erfindungsgemäßen Absenkeinrichtung das Betonieren einer Brücke mit Fahrbahnplatte vereinfacht werden.

Weitere Vorteile der Erfindung ergeben sich aus der Beschreibung und der Zeichnung.

Besondere Ausführungsformen der vorliegenden Erfindung werden nachfolgend unter Bezugnahme auf die beiliegende Zeichnung näher erläutert Die gezeigten und beschriebenen Ausführungsformen sind nicht als abschließende Aufzählung zu verstehen, sondern haben vielmehr beispielhaften Charakter für die Schilderung der Erfindung.

In der Zeichnung zeigen:
- Fig. 1a bis 3b: eine Ansicht und Schnittbilder in verschiedenen Schnittebenen einer erfindungsgemäßen Absenkeinrichtung mit einem Schieber als Exzenterhebelhaltevorrichtung, wobei der Hubkolben in Absenkposition und in Arbeitsposition sowie dessen Übergang von der Arbeitsposition in die Absenkposition dargestellt ist;
- Fig. 4: eine Ausführungsform einer erfindungsgemäßen Absenkeinrichtung mit einer Ausschiebfeder für den Hubkolben;
- Fig. 5: eine weitere Ausführungsform einer erfindungsgemäßen Absenkeinrichtung, besonders geeignet für die Verwendung in einer Deckenschalung für eine Fahrbahnplatte im Brückenbau;
- Fig. 6a: eine Schalung einer Fahrbahnplatte einer Brücke mit Einbau der erfindungsgemäßen Absenkeinrichtung aus Figur 5 in eine als Fahrbahnplattenkonsole ausgebildete Stützvorrichtung;
- Fig. 6b: die Fahrbahnplattenkonsote mit der erfindungsgemäßen Absenkeinrichtung wie in Figur 6a dargestellt; und

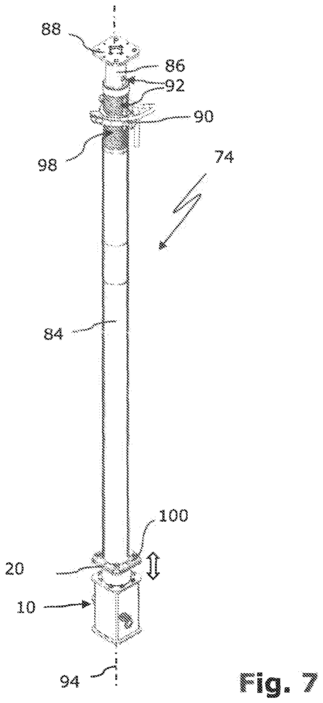

- Fig. 7: eine Stützvorrichtung in Form einer Baustütze, die mit einer Absenkeinrichtung gemäß den Fign. 1a bis 3b versehen ist, in einer perspektivischen Ansicht.

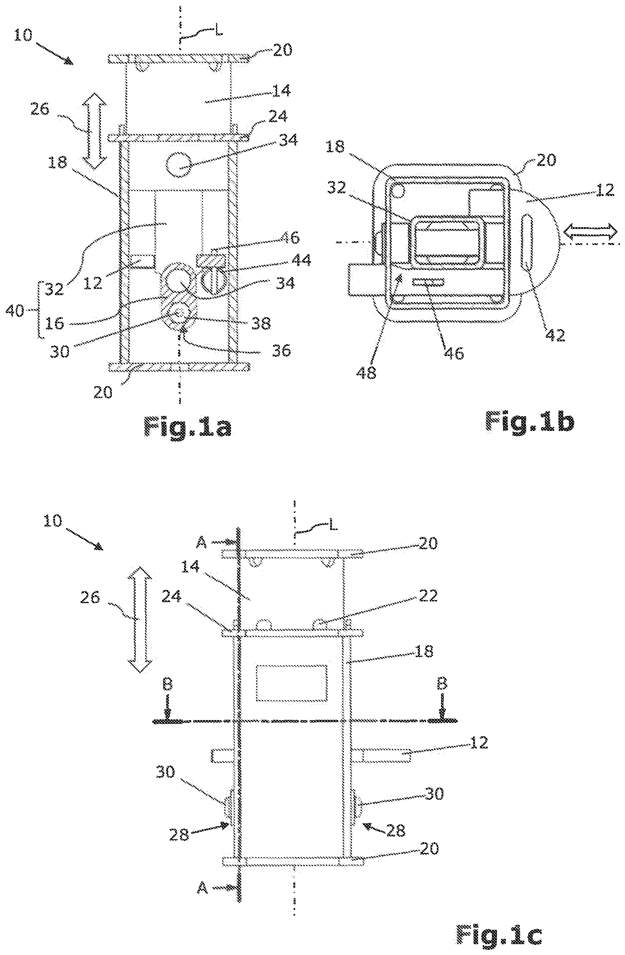

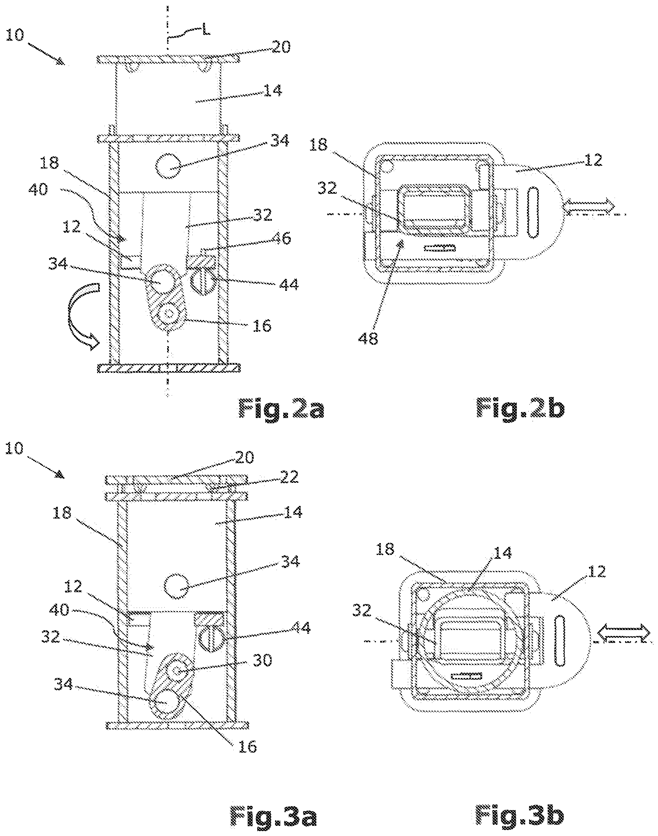

In den **Figuren 1a** bis **3b** ist eine erfindungsgemäße Absenkeinrichtung **10** mit einem Schieber **12** als Exzenterhebelhaltevorrichtung in einer Seitenansicht und in verschiedenen Schnittebenen dargestellt. Die Absenkeinrichtung 10 weist eine mit **L** bezeichnete Längsachse, einen Hubkolben **14** sowie einen Exzenterhebel **16** auf. Der Hubkolben 14 sowie die Stellung des Exzenterhebels 16 sind in den **Figuren 3a** und **3b** in Absenkposition und in den Figuren 1a und 1b in Arbeitsposition sowie deren Übergang von der Arbeitsposition in die Absenkposition in den **Figuren 2a** und **2b** dargestellt,

Die Schnittdarstellungen sind jeweils entsprechend der in der Darstellung der erfindungsgemäßen Absenkeinrichtung 10 aus Figur 1c eingezeichneten Schnittebenen dargestellt. Die Figuren 1a, 2a und 3a zeigen dabei Schnittdarstellungen gemäß der Schnittebene A-A und die Figuren 1b, 2b und 3b zeigen Schnittdarstellungen gemäß der Schnittebene B-B, In Schnittebene A-A ist die Stellung des Exzenterhebels 16 gut zu erkennen und in Schnittebene B-B- ist die zugehörige Position des Schiebers 12 gut zu erkennen.

Die Stützbasis **18** kann in Form eines Gehäuses ausgeführt sein, das den Mechanismus der Arretiervorrichtung schützend umschließt. Sowohl die Stützbasis 18 als auch der Hubkolben 14 weisen an ihren freien Enden eine Abschlussplatte auf, von der jeweils ein Stützkopf **20** ausgebildet ist.

Am hubkolbenseitigen Ende der Stützbasis 18 können zwischen Stützbasis 18 und Stützkopf 20 des Hubkolbens 14 Anschlagnoppen **22** angeordnet sein. Die Anschlagnoppen 22 können dabei auf einer Endplatte **24** der Stützbasis 18 beispielsweise angeschweißt sein. Die Endplatte 24 weist eine der Umfangsform des Querschnittes des Hubkolbens 14 entsprechend ausgeformte Öffnung (in den Fign. nicht bezeichnet) auf, durch die der Hubkolben 14 durchgeschoben ist. Die Querschnittsform des Hubkolbens 14 kann z. B. kreisförmig ausgeführt sein, Es können jedoch auch Ausführungsformen mit einer anderen, insbesondere polygonalen, bevorzugt rechteckigen, Querschnittsform eingesetzt werden. Die Richtung der verschiebbaren Lagerung des Hubkolbens 14 in der Stützbasis 18 ist durch einen Doppelpfeil **26** symbolisiert eingezeichnet. Der Hubkolben 14 ist von seiner in den Fign. 1 gezeigten herausgeschobenen Arbeitsposition in die in den Fign. 3 gezeigte Absenkposition in einer zur Längsachse L axialen Richtung einschiebbar und mittels der Arretiervorrichtung in der herausgeschobenen Arbeitsposition arretierbar.

In das die Stützbasis 18 ausbildende Gehäuse sind zwei sich gegenüberliegende Drehlager **28** als Bohrungen eingebracht. In diesen Drehlagern 28 ist der Exzenterhebel 16 drehbar befestigt. In den Drehlagern 28 kann dazu jeweils ein Ende einer bolzenförmigen Stützwelle **30** gelagert sein, wobei der Exzenterhebel 16 an der Stützwelle 30 befestigt ist.

Das axiale Höhenmaß der Absenkeinrichtung 10 kann z. B. 270 mm bei in Arbeitsposition angeordnetem Hubkolben 14 und 216 mm bei in Absenkposition angeordnetem Hubkolben 14 betragen, woraus sich ein Absenkweg von 54 mm ergibt. Die Absenkeinrichtung 10 kann z. B. eine Masse von 6,5 Kilogramm aufweisen, wobei eine Tragfähigkeit 50 Kilonewton gewährleistet sein kann. Wird die Absenkeinrichtung 10 zum Abstützen einer Schalung, insbesondere einer Deckenschalung, eingesetzt, so ist ein Schnellausschalen unter Last, d. h. selbst bei einem großen Frischbetondruck, bei dennoch annähernd lastfreier Betätigung der Absenkeinrichtung 10 möglich.

Die **Figuren 1a** und **1b** zeigen eine erfindungsgemäße Absenkeinrichtung 10 mit in Arbeitsposition, d. h. aus der Stützbasis 18 maximal ausgerückten Position (=Vorhubposition) angeordnetem Hubkolben 14. Die Absenkeinrichtung befindet sich mit anderen Worten in ihrer Stützfunktionsstellung. Die die Teile der Arretiervorrichtung, z. B. der Exzenterhebel 16, sind entsprechend positioniert. Der in den Drehlagern 28 an der Stützbasis 18 drehbar befestigte Exzenterhebel 16 ist über ein Pleuelelement **32** mit dem Hubkolben 14 beweglich verbunden. Dazu weisen der Exzenterhebel 16 und der Hubkolben 14 jeweils eine Bohrung auf, die als weitere Drehlager dienen. Das Pleuelelement 32 weist in dessen Endbereichen jeweils eine bolzenartige Drehachse **34** auf, Die beiden Drehachsen 34 sind jeweils in einem der weiteren Drehlager des Exzenterhebels 16 und des Hubkolbens 14 gelagert.

Der Schwerpunkt des Exzenterhebels 16 befindet sich außerhalb der von der Stützweile 30 ausgebildeten Drehachse des Exzenterhebels 16 zwischen dem Hubkolben 14 und der Drehachse des Exzenterhebels 16.

In **Figur 1a** ist die Nabe **36** der Drehachse der Stützwelle 30 und damit des Exzenterhebels 16 und eine Schraubenmutter **38** zu deren Befestigung erkennbar. Der Hubkolben 14, das Pleuelelement 32 und der Exzenterhebel 16 sind ähnlich des Aufbaus eines Hubkolbenmotors angeordnet, wobei das Pleuelelement 32 und der Exzenterhebel 16 einen Kniehebel **40** ausbilden, über den der Hubkolben 14 mit der Stützbasis 18 beweglich verbunden ist. Der Hubkolben 14 und die Stützbasis 18 sind in der dargestellten Arbeitsposition über den Exzenterhebel 16 gegeneinander abgestützt. In der dargestellten Ausführungsform der erfindungsgemäßen Absenkeinrichtung 10 erfolgt dies über die Verbindung mit dem Pleuelelement 32.

Die erfindungsgemäße Absenkeinrichtung 10 weist also eine als Gehäuse ausgebildete Stützbasis 18 mit Anschlagnoppen 22 auf deren Kopfseite und einen von dem Hubkolben 14 ausbildeten Stempel auf. Letzterer ist in dem Gehäuse in axialer Richtung verschieblich gelagert. Hubkolben 14 und Stützbasis 18 sind über den Kniehebel 40 miteinander verbunden. Eine Hubbewegung des Hubkolbens 14 ist somit nach oben über den Kniehebel 40 und nach unten über die Anschlagnoppen 22 des Gehäuses begrenzt. Der Kniehebel 40 setzt sich aus einer Art lose zusammengesteckter Kurbelwelle, die von dem Exzenterhebel 16 und dessen Drehachsen, also der Stützwelle 30 und der bolzenartige Drehachse 34 über die das Pleuelelement 32 am Exzenterhebel 16 befestigt ist, gebildet ist und dem Pleuelelement 32 zusammen, das mittig auf der derart gebildeten Kurbelwelle sitzt.

Bei der Kurbelwelle sind die Stützwelle 30 und der Exzenterhebel 16 zweigeteilt, wobei das Pleuelelement 32 zwischen den beiden Teilen des Exzenterhebels 16 mittels eines die beiden Teile der Stützwelle 30 verbindenden Drehbolzens drehbar befestigt ist. Der Drehbolzen wird von der bolzenartige Drehachse 34, über die das Pleuelelement 32 am Exzenterhebel 16 befestigt ist, ausgebildet. Für die Ausführung der Kurbelwelle können als Bauteile zwei einschnittige Achsen und zwei das Exzenterelement 16 ausbildende Exzenterbleche und eine zweischnittige Achse verwendet werden.

In **Figur 1b** ist die Stellung des Schiebers 12 in der dargestellten Arbeitsposition gezeigt. Der Schieber 12 hat eine U-förmige Grundform, d. h. eine U-Form mit unterschiedlich langen Schenkeln. Er ist senkrecht zur Richtung der Verschiebbarkeit des Hubkolbens durch Schlitze in der Stützbasis 18 durch diese durchgeschoben. Die Ein- bzw. Ausschiebrichtung des Schiebers 18 ist in der Figur durch einen nicht näher bezeichneten Doppelpfeil schematisch dargestellt. In dem außerhalb der das Gehäuse ausbildenden Stützbasis 18 angeordneten Bereich des Schiebers 12 kann dieser eine Werkzeugeingriffsnut **42** aufweisen. Der lange Schenkel des Schiebers 12 berührt unmittelbar an einer Seite das Pleuelelement 32. Auf der gegenüberliegenden Seite berührt das Pleuelelement 32 unmittelbar auch den kurzen Schenke! des Schiebers 12. Das Pleuelelement 32 ist also durch den in der dargestellten Stellung direkt beidseitig daran anliegenden Schieber 12 in seiner Beweglichkeit blockiert. Über das Pleuelelement 32 ist auch der daran befestigte Exzenterhebel in seiner Beweglichkeit blockiert. Der Schieber 12 hält also den Exzenterhebel in seiner momentanen Stellung und bildet derart eine Exzenterhebelhaltevorrichtung aus. Über den Schieber 12, der quer zum Pleuelelement 32 verläuft, kann eine Bewegung der Kurbelwelle, wenn das Pleuelelement 32 und die Kurbelwelle sich in vertikal gestreckter Position, d. h. bei Maximalhub des Hubkolbens 14, befinden, also entweder gesperrt oder freigegeben werden. Durch eine Kurbelwellenbewegung nach unten senkt sich der Hubkolben 14 - der Schwerkraft folgend- ab.

Die vom Schieber 12 ausgebildete Exzenterhebelhaltevorrichtung kann eine Rückstellfeder **44** (integrierte Federrückstellung) aufweisen, wobei der Schieber 12, z. B. über einen Befestigungsstift **46**, mittels der Rückstellfeder 44 an der Stützbasis 18 befestigt ist. Weiter kann an dem Schieber 12 eine Sichtmarkierung zur Unterscheidung der Absenkposition von der Arbeitsposition markiert sein. Diese Sichtmarkierung kann z. B. aus einem roten und einem grünen, auf dem freien Ende des langen Schenkels des Schiebers 12 aufgebrachten Sichtfeld bestehen, wobei je nach Stellung des Schiebers 12 nur das rote Sichtfeld oder das rote und das grüne Sichtfeld außerhalb des Gehäuses zu liegen kommen.

Der Schieber 12 kann gemäß Fig. 1b einen keilförmigen Endbereich **48** zum Verdrehen des Exzenterhebels 16 in seinem Drehlager aufweisen. Letzteres kann in der dargestellten Ausführungsform durch Eingreifen des keilförmigen Endbereichs 48 an dem Pleuelelement 32 vorgenommen werden. Durch Wegdrücken des Pleuelelements 32 aus der dargestellten Lage wird dabei auch der Exzenterhebel 16 in seinem Drehlager verdreht. Der längere Schenkel des Schiebers 12 ist kann also keilförmig ausgeführt und mit einer Farbmarkierung versehen sein.

In Figur 1c sind die außerhalb der Stützbasis 18 angeordneten Naben der Drehachse der Stützwelle 30, an der der Exzenterhebel 16 zu dessen drehbarer Befestigung in den Drehlagern 28 z. B. angeformt ist, erkennbar.

Die **Figuren 2a** und **2b** zeigen die erfindungsgemäße Absenkeinrichtung 10 im Übergang von der Arbeitsposition in die Absenkposition. D. h. der Hubkolben 14 befindet sich zwischen Arbeitsposition und Absenkposition und die Teile, z. B. der Exzenterhebel 16 und das Pleuelelement 32, der Arretiervorrichtung sind entsprechend positioniert, bzw. befinden sich in einer in der Figur 2a durch einen abgerundeten Pfeil symbolisierten Übergangsphase.

In **Figur 2b** ist dargestellt, wie der teilweise aus der Stützbasis 18 seitlich herausgezogene Schieber 12 auf der Seite seines kurzen Schenkels das Pleuelelement 32 nicht mehr berührt. Damit ist eine Bewegung des Kniehebels 40 und damit des Exzenterhebels 16 freigegeben. Mittels des keilförmigen Endbereichs 48 des langen Schenkels des Schiebers 12 ist das Pleuelelement 32 in der Zeichnung nach links aus seiner (stabilen) Gleichgewichtsposition herausgedrückt. Dadurch ist auch der Exzenterhebel 16 aus der Gleichgewichtsposition nach links herausgedrückt. Somit erfolgt durch die Schwerkraft bzw. unter Last das Absenken des Hubkolbens 14 in die Absenkposition. Dabei führt der Exzenterhebel 16 eine Drehung in seinem Drehlager um bis zu 180 Grad in Richtung des eingezeichneten Pfeils durch. Die Kurbelwelle führt also eine Halbrotation aus.

Die **Figuren 3a** und **3b** zeigen die erfindungsgemäße Absenkeinrichtung 10 (Schnellabsenkung) in ihrer Absenkstellung. D. h. der Hubkolben 14 befindet sich in Absenkposition ( = Rückhubposition) und die Teile, z. B. der Exzenterhebel 16 und das Pleuelelement 32, der Arretiervorrichtung sind entsprechend positioniert. In der Figur 3a ist zu erkennen, dass der Hubkolben 14 maximal in die Stützbasis 18 eingeschoben ist, Dabei liegt die den Stützkopf 20 des Hubkolbens 14 ausbildende Abschlussplatte auf den Anschlagnoppen 22 der Stützbasis 18 auf. Der Exzenterhebel 16 ist um fast 180 Grad um die Drehachse der Stützwelle 30 in seinem Drehlager herum gedreht. Der Schwerpunkt des Exzenterhebels 16 befindet sich unterhalb dieser Drehachse. In Figur 3b ist zu erkennen, dass der durch die Rückstellfeder wieder in die Stützbasis 18 zurückgezogene Schieber 12 mit seinem kurzen Schenkel an das Pleuelelement 32 stößt, so dass der Schieber 12 in dieser Stellung nicht vollständig in seine Ursprungsposition gemäß Figur 1b zurückgezogen werden kann. Weiter ist in diesem Schnittbild der kreisförmige Querschnitt des eingeschobenen Hubkolbens 14 zu erkennen.

Ein Schnellabsenken mit der dargestellten erfindungsgemäßen Absenkeinrichtung 10 erfolgt also wie folgt: In Arbeitsstellung ist der Stempel, d. h. der Hubkolben 14, maximal ausgerückt, d. h. aus der Stützbasis 18 herausgeschoben. Mit anderen Worten befindet sich die Absenkeinrichtung in ihrer Stützfunktionsstellung. Der Schieber 12 hält Pleuelelement 32 und Kurbelwelle in senkrechter, evtl. um ca. ein Grad leicht vorgeneigter Position, in der der Schieber 12 über Pleuelelement 32 und Exzenterhebel 16 auf die Stützbasis 18 abgestützt ist. Diese Position wird als Gleichgewichtsposition oder Totstellung des Kniehebels 40 bezeichnet. Aufgrund dieser gestreckten Kniehebelposition werden die an der Absenkeinrichtung 10 angreifenden (Frischbeton-)Lasten vom Stempel aufgenommen und direkt durch Pleuelelement 32 und Kurbelwelle in die das Gehäuse ausbildende Stützbasis 18 abgeleitet. Der Schieber 12 verbleibt dabei aufgrund der günstigen Kniehebelstellung annähernd lastfrei und kann daher im belasteten Zustand immer leicht, d. h. ohne großen Kraftaufwand, betätigt, d. h. in seine Freigabestellung herausgezogen werden. Von außen ist auf dem aus dem Gehäuse herausstehenden langen Schenkel des Schiebers 12 eine grüne Farbmarkierung erkennbar. Diese zeigt an, dass der Kniehebelmechanismus, d. h. die Arretiervorrichtung, gesichert ist, und damit die Absenkfunktion aktiv ist, d. h. durch Herausziehen des Schiebers 12 das Schnellabsenken erfolgen kann.

Zum Entsperren der Schnellabsenkung wird der Schieber 12 leicht entgegen seiner Federrückstellung verschoben. Zu dieser mechanischen Verschiebung kann z. B. auch ein Hammer und/oder ein Nagel- oder Brecheisen verwendet werden. Dadurch werden Pleuelelement 32 und Kurbelwelle einseitig auf der Schieberseite mit kürzerem Schenkel freigegeben. Das Absenken wird initiiert, indem der Schieber 12 weiter verschoben wird. Sein keilförmiger Endbereich 48 überdrückt nun, wenn nicht bereits selbsttätig aufgrund der Vorneigung geschehen, die Totstellung des Kniehebels 40. Pleuelelement 32 und Kurbelwelle knicken ein und die axial gerichtete Absenkbewegung des Stempels beginnt mit Unterstützung der Schwerkraft, wie in Figur 2a dargestellt.

Bevor die Kurbelwelle ihre Halbrotation während der Abwärtsbewegung des Hubkolbens 14 vollenden kann, trifft der Hubkolben 14, d. h. dessen Stützkopf 20, auf die Anschlagnoppen 22 der Gehäuseoberseite der Stützbasis 18 auf. Somit ist gewährleistet, dass der Kniehebelmechanismus im Laufe der Ausschalbewegung vollkommen lastfrei bleibt. Das Gehäuse nimmt folglich die komplette durch die Lageänderung freiwerdende potentielle Energie auf und überträgt die resultierende Absenklast, die im Falle des Abstützens einer (Decken)Schalung im Wesentlichen dem Eigengewicht der (Decken)Schalung entspricht, auf den Boden/Untergrund, auf dem die Absenkeinrichtung 10 oder eine mit der Absenkeinrichtung versehene Stützvorrichtung, beispielsweise in Form einer Baustütze, eines Tragturms oder einer Konsole, aufsteht.

Die im Gehäuse integrierte z. B. als Druckfeder ausgeführte Rückstellfeder 44 zieht den Schieber 12 wieder bis zum Anschlag am Pleuelelement 32 in das Gehäuse zurück. Von außen ist jetzt nur die rote Farbmarkierung sichtbar, anzeigend, dass die Ausschalbewegung abgeschlossen ist und somit die Absenkfunktion inaktiv ist. Im Falle des Ausschalens einer von der Absenkeinrichtung 10 abgestützten (Decken)Schalung ergibt sich ein resultierender Freiraum zwischen Unterkante Betondecke und Oberkante Deckenschalung von ca. 5cm, was dem maximalen Hubweg des Hubkolbens 14 in der Stützbasis 18 entspricht. Vor erneutem Einsatz muss die Schnellabsenkung händisch zurückgesetzt (scharfgestellt) werden, um funktionsfähig zu sein.

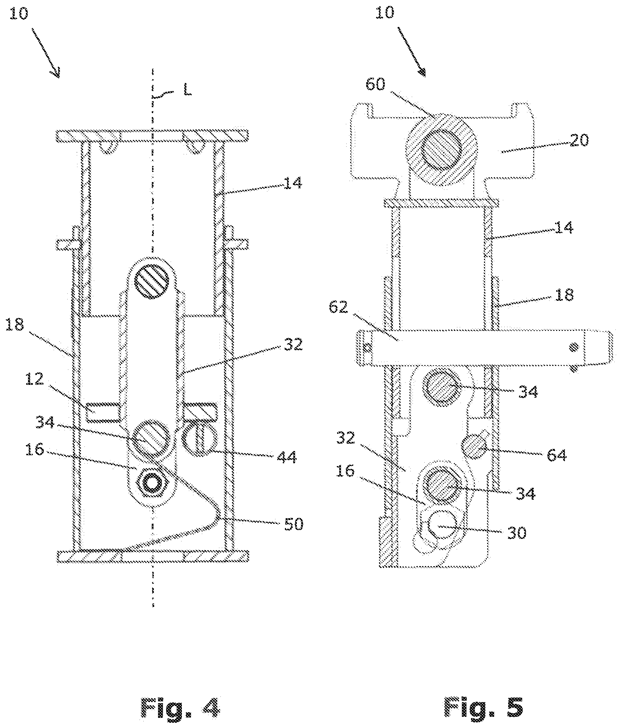

In **Figur 4** ist eine Ausführungsform einer erfindungsgemäßen Absenkeinrichtung 10 mit einer Ausschiebfeder **50** für den Hubkolben 14 dargestellt. Die Ausführungsform entspricht im Wesentlichen der in den Figuren 1a bis 3b dargestellten Ausführungsform, wobei jedoch zusätzlich eine Ausschiebefeder 50, hier beispielhaft in Form einer Bandfeder, in das die Stützbasis 18 ausbildende Gehäuse eingebaut ist, Die Ausschiebefeder 50 ist an dem Drehbolzen 34 der Kurbelwelle befestigt, an dem das Pleuelelement 32 drehbar befestigt ist. Dieser Drehbolzen 34 verbindet die zwei Teile des Exzenterhebels 16. Die Ausschiebefeder 50 drückt die Kurbelwelle und damit den Hubkolben 14 in die Arbeitsposition, sobald die Absenkeinrichtung 10 unbelastet, d. h. in einem lastfreien Zustand, ist, Der Schieber 12 sperrt mithilfe seiner ohnehin vorhandenen Federrückstellung 44 den Kniehebel 40 und damit den Exzenterhebel 16 selbsttätig nachdem der Hubkolben 14 von der Absenkposition in die Arbeitsposition zurückgedrückt ist, Der Schieber 12 sperrt dadurch mithilfe seiner ohnehin vorhandenen Federrückstellung den Kniehebelmechanismus in seiner in der Arbeitsposition des Hubkolbens 14 eingenommenen Maximalstellung, d. h. in der Gleichgewichtsposition oder Totstellung des Kniehebels 40. So kann ein selbsttätiges Aktivsetzen der Schnellabsenkung verwirklicht werden. Von außen ist wieder die grüne Farbmarkierung sichtbar um anzuzeigen, dass die Absenkfunktion aktiv ist.

Der Stützkopf 20 des Hubkolbens 14 kann eine Rolle **60** aufweisen, wie dies bei der in **Figur 5** dargestellten Ausführungsform der erfindungsgemäßen Absenkeinrichtung 10 der Fall ist. Über eine solche Rolle 60 kann beispielsweise eine Schiene einer Deckenschalung bei einem Vorschubbetonierverfahren, d. h. einer Taktschiebeanlage, wie diese üblicherweise im Brückenbau eingesetzt wird, geführt werden. Bei der Absenkeinrichtung gemäß Fig. 5 ist ein zusätzlicher Führungsbolzen **62** durch Bolzendurchführungsbohrungen in der Stützbasis 18 und Führungsschlitze im Hubkolben 14 geführt. Als Exzenterhebelhaltevorrichtung ist ein Arretierbolzen **64** durch weitere Bohrlöcher in der Stützbasis 18 geführt. Der Arretierbolzen 64 liegt direkt an einer Seite des Pleuelelements 32 an. Auf der gegenüberliegenden Seite des Pleuelelements 32 liegt dieses direkt an der Stützbasis 18 an. Dadurch ist das Pleuelelement 32 in der dargestellten Lage des Hubkolbens 14 in Arbeitsposition arretiert. Wenn der Arretierbolzen 64 aus der Stützbasis 18 herausgezogen wird, kann das Pleuelelement 32 in der Figur nach rechts abkippen. Zum Zerstören des labilen Gleichgewichts des Hubkolbens 14 kann die Absenkeinrichtung 10 einen von außen zugängliches Betätigungsmittel **66**, hier in Form einer Schlagplatte, aufweisen. Die Schlagplatte kann insbesondere am Pleuelelement 32 befestigt, insbesondere angeformt sein. Wird die Schlagplatte in einer zur Längsachse L der Absenkeinrichtung 10 radialen Richtung nach innen bewegt, so wird dadurch die Absenkbewegung des Hubkolbens 14 initiiert.

Der Kniehebel 40, der von den beweglich über ein Drehlager und einen Drehbolzen 34 miteinander verbundenen Pleuelelement 32 und Exzenterhebel 16 ausgebildet ist, kann entsprechend abkippen, wodurch die von Stützachse 30 und Exzenterhebel 16 ausgebildete Kurbelwelle eine Drehung in ihrem Drehlager ausführt und der Hubkolben 14 in axialer Richtung in die Absenkposition verschoben wird.

Nach einer in der Zeichnung nicht näher dargestellten Ausführungsform der Erfindung kann das Betätigungsmittel 66 auch dazu dienen, einen federkraftbeaufschlagten Schlagbolzen freizugeben, so dass dieser in Richtung auf und gegen das Pleuelelement 32 oder den Exzenterhebel 16 beschleunigt wird, um so das labile Gleichgewicht des Hubkolbens zu zerstören und die Absenkbewegung des Hubkolbens 14 zu initiieren. Es versteht sich, dass das zur Beschleunigung des Schlagbolzens eingesetzte Federelement sowie auch dessen Masse auf einen für das Auslösen der Absenkbewegung ausreichend großen Impuls ausgelegt sein müssen. Bei dieser Bauart kann die Absenkeinrichtung besonders bequem und ggf. ohne Zuhilfenahme eines Werkzeugs, wie beispielsweise eines Hammers oder dergleichen, aktiviert werden.

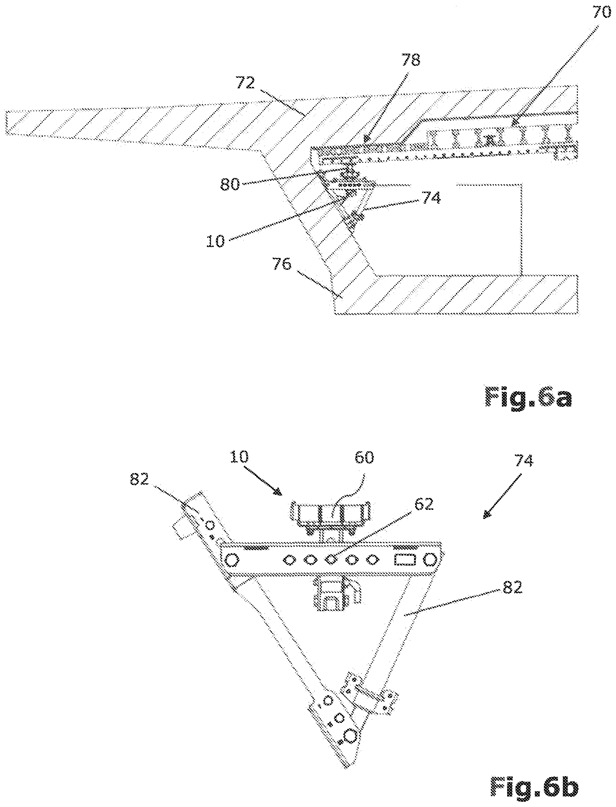

In **Figur 6a** ist eine Deckenschalung **70** einer Fahrbahnplatte **72** einer Brücke mit Einbau der erfindungsgemäßen Absenkeinrichtung 10 aus Figur 5 in eine als Fahrbahnplattenkonsole ausgeführte Stützvorrichtung **74** dargestellt. Die Fahrbahnplattenkonsole ist seitlich z. B. mittels eines Ankers an eine Seitenwand einer unter der Fahrbahnplatte 72 z. B. zu Aussteifungszwecken anbetonierten Kastenkonstruktion **76** festgeschraubt. Ein Schalhautelement **78** ist mittels der Absenkeinrichtung 10 abgestützt. Zwischen der Rolle des Stützkopfes der in der Fahrbahnplattenkonsole 74 montierten Absenkeinrichtung 10 und dem Schalhautelement 78 ist eine Schiene **80** geführt. Das Schalhautelement 78 formt eine Unterseite der Fahrbahnplatte 72 aus, wobei die Absenkeinrichtung 10 in einer Fahrbahnplattenkonsole angeordnet ist, Die Absenkeinrichtung 10 ist also in die als Fahrbahnplattenkonsole ausgeführte Stützvorrichtung 74 zum Ausbilden einer Taktschiebeanlage im Brückenbau integriert.

In **Figur 6b** ist die Fahrbahnplattenkonsole mit der erfindungsgemäßen Absenkeinrichtung 10 mit Rolle 60 wie in Figur 6a dargestellt gezeigt. Die Fahrbahnplattenkonsole wird von einer dreiecksförmigen Stahlträgerkonstruktion **82** mit verschiedenen Verschraubungsmäglichkeiten ausbildenden Bohrungen ausgebildet. An eine dieser Bohrungen ist die erfindungsgemäße Absenkeinrichtung 10 mit dem Führungsbolzen 62 befestigt. Die Stahlträgerkonstruktion ist derart einstellbar, dass sie an unterschiedliche Neigungswinkel von Seitenwänden der Kastenkonstruktion, wie in Figur 6a dargestellt, angepasst werden kann.

In **Fig**. **7** ist eine weitere Stützvorrichtung 74 in Form einer teleskopierbaren Baustütze gezeigt. Die Baustütze weist ein Außenrohr **84** auf, in dem ein Innenohr **86** längsverschieblich geführt ist. Das Innenrohr 86 ist an seinem freien Ende mit einer Kopfplatte **88** versehen. Zur Längeneinstellung der Baustütze dient hier ein Absteckbolzen **90**, der Durchgangsausnehmungen **92** des Außenrohrs 84 und des Innenrohrs 86 durchgreift. Der Absteckbolzen 90 ist in einer zur Längsachse **94** der Stützvorrichtung 74 axialen Richtung auf einer Stellmutter **96** abgestützt ist. Die Stellmutter 96 greift in ein Außengewinde **98** des Außenrohrs 84 ein. Die Absenkeinrichtung 10 ist rein beispielhaft fußseitig an der Stützvorrichtung 74 befestigt. Der Stützkopf 20 der Absenkeinrichtung 10 ist dazu mit der Fußplatte **100** der Baustütze verschraubt oder in an derer Weise an der Fußplatte 100 befestigt sein. Es versteht sich, dass die Absenkeinrichtung 10 auch an der Kopfplatte 88 der Baustütze befestigt sein kann.

## Patentansprüche

1. Absenkeinrichtung (10), mit einem Hubkolben (14), einer Stützbasis (18) und mit einer Arretiervorrichtung, wobei der Hubkolben (14) in der Stützbasis (13) verschiebbar gelagert ist und von einer herausgehobenen Arbeitsposition in eine Absenkposition einschiebbar ist und mittels der Arretiervorrichtung in der herausgeschobenen Arbeitsposition arretierbar ist, wobei die Arretiervorrichtung ein Drehlager (28) und einen Exzenterhebel (16) aufweist, wobei der Exzenterhebel (16) in dem Drehlager (28) drehbar befestigt ist und der Hubkolben (14) und die Stützbasis (18) in der Arbeitsposition (s.o.) über den Exzenterhebel (16) gegeneinander abgestützt sind, **dadurch gekennzeichnet, dass** an dem Exzenterhebel (16) ein Pleuelelement (32) beweglich befestigt ist, wobei der Hubkolben (14) über das Pleuelelement (32) und den Exzenterhebel (16) mit der Stützbasis (18) beweglich verbunden ist.

2. Absenkeinrichtung nach Anspruch 1, **dadurch gekennzeichnet, dass** der Exzenterhebel (16) über das Drehlager (28) an der Stützbasis (18) drehbar befestigt ist.

3. Absenkeinrichtung nach einem der Anspruch 1 oder 2, **dadurch gekennzeichnet, dass** in dem Drehlager (28) eine Stützwelle (30) gelagert ist, wobei der Exzenterhebel (16) mit der Stützweite (30) eine Kurbelwelle ausbildet.

4. Absenkeinrichtung nach einem der Ansprüche 1 bis 3, **dadurch gekennzeichnet, dass** die Arretiervorrichtung eine Exzenterhebelhaltevorrichtung (12, 64) aufweist.

5. Absenkeinrichtung nach Anspruch 4, **dadurch gekennzeichnet dass** die Exzenterhebelhaltevorrichtung (12, 64) einen Schieber (12) oder einen Arretierbolzen (64) umfasst.

6. Absenkeinrichtung nach Anspruch 5, **dadurch gekennzeichnet, dass** der Schieber (12) einen keilförmigen Endbereich (48) zum Verdrehen des Exzenterhebels (16) in dem Drehlager (28) aufweist.

7. Absenkeinrichtung nach einem der Ansprüche 5 oder 6, **dadurch gekennzeichnet, dass** die Exzenterhebelhaltevorrichtung eine Rückstellfeder (44) aufweist, wobei der Schieber (12) mittels der Rückstellfeder (44) an der Stützbasis (18) befestigt ist.

8. Absenkeinrichtung nach einem der Ansprüche 5 bis 7, **dadurch gekennzeichnet, dass** der Schieber (12) eine Sichtmarkierung zur Unterscheidung der Absenkposition von der Arbeitsposition aufweist.

9. Absenkeinrichtung nach einem der Ansprüche 5 bis 8, **dadurch gekennzeichnet, dass** der Schieber (12) eine Werkzeugeingriffsnut (42) aufweist.

10. Absenkeinrichtung nach Anspruch 1, **dadurch gekennzeichnet, dass** die Absenkeinrichtung ein Betätigungsmittel (66), insbesondere in Form einer von außen zugänglichen Schlagplatte, aufweist, durch dessen Betätigung die Absenkeinrichtung (10) aktivierbar ist.

11. Absenkeinrichtung nach einem der vorhergehenden Ansprüche, **dadurch gekennzeichnet, dass** die Stützbasis (18) und/oder der Hubkolben (14) einenends einen Stützkopf (20) ausbilden, wobei der Stützkopf (20) bevorzugt eine Rolle (60) aufweist.

12. Absenkeinrichtung nach Anspruch 11, **dadurch gekennzeichnet, dass** Anschlagnoppen (22) am hubkolbenseitigen Ende der Stützbasis (18) vorgesehen sind.

13. Absenkeinrichtung nach einem der vorhergehenden Ansprüche, **dadurch gekennzeichnet, dass** die Stützbasis (18) eine Ausschiebfeder (50) aufweist, wobei der Hubkolben (14) mittels der Ausschiebefeder (50) in Richtung der Arbeitsposition gedrückt wird.

14. Stützvorrichtung (74) für den Baubereich, aufweisend zumindest eine Absenkeinrichtung (10) nach einem der vorhergehenden Ansprüche.

15. Stützvorrichtung nach Anspruch 15, **dadurch gekennzeichnet, dass** die Stützvorrichtung eine Baustütze, insbesondere Schwerlaststütze, oder ein Traggerüst, insbesondere in Form eines Tragturms, ist.

16. Deckenschalung (70) mit einer Absenkeinrichtung (10) nach einem der Ansprüche 1 bis 13 und einem Schalhautelement (78), **dadurch gekennzeichnet, dass** das Schalhautelement (78) mittels der Absenkeinrichtung (10) abgestützt ist.

17. Deckenschalung nach Anspruch 16, **dadurch gekennzeichnet, dass** das Schalhautelement (78) eine Unterseite einer Fahrbahnplatte (72) ausformt, wobei die Absenkeinrichtung (10) an einer als Fahrbahnplattenkonsole ausgeführten Stützvorrichtung angeordnet ist.

## Claims

1. Lowering device (10) comprising a lifting piston (14), a support base (18) and a locking apparatus, wherein the lifting piston (14) is slidably mounted in the support base (18) and can be slid from a pushed-out working position into a lowered position and can be locked in the pushed-out working position by means of the locking apparatus, wherein the locking apparatus has a pivot bearing (28) and an eccentric lever (16), wherein the eccentric lever (16) is rotatably secured in the pivot bearing (28), and the lifting piston (14) and the support base (18) are supported against one another in the working position (s.o.) by means of the eccentric lever (16), **characterized in that** a con rod element (32) is movably secured to the eccentric lever (16), wherein the lifting piston (14) is movably connected to the support base (18) by means of the con rod element (32) and the eccentric lever (16).

2. Lowering device according to claim 1, **characterized in that** the eccentric lever (16) is rotatably secured to the support base (18) by means of the pivot bearing (28).

3. Lowering device according to any of claims 1 or 2, **characterized in that** a support shaft (30) is mounted in the pivot bearing (28), wherein the eccentric lever (16) forms a crankshaft together with the support shaft (30).

4. Lowering device according to any of claims 1 to 3, **characterized in that** the locking apparatus has an eccentric-lever holding apparatus (12, 64).

5. Lowering device according to claim 4, **characterized in that** the eccentric-lever holding apparatus (12, 64) comprises a slide (12) or a locking pin (64).

6. Lowering device according to claim 5, **characterized in that** the slide (12) has a cuneiform end region (48) for rotating the eccentric lever (16) in the pivot bearing (28).

7. Lowering device according to any of claims 5 or 6, **characterized in that** the eccentric-lever holding apparatus has a return spring (44), wherein the slide (12) is secured to the support base (18) by means of the return spring (44).

8. Lowering device according to any of claims 5 to 7, **characterized in that** the slide (12) has a visible marking for distinguishing between the lowered position and the working position.

9. Lowering device according to any of claims 5 to 8, **characterized in that** the slide (12) has a tool engagement groove (42).

10. Lowering device according to claim 1, **characterized in that** the lowering device has an actuation means (66), in particular in the form of a strike plate accessible from the exterior, the lowering device (10) being able to be activated by the actuation of said actuation means.

11. Lowering device according to any of the preceding claims, **characterized in that** the support base (18) and/or the lifting piston (14) form a support head (20) at one end, wherein the support head (20) preferably comprises a roller (60).

12. Lowering device according to claim 11, **characterized in that** stop knobs (22) are provided on the end of the support base (18) facing the lifting piston.

13. Lowering device according to any of the preceding claims, **characterized in that** the support base (18) has a biasing spring (50), wherein the lifting piston (14) is pressed in the direction of the working position by means of the biasing spring (50).

14. Support apparatus (74) for the construction sector, comprising at least one lowering device (10) according to any of the preceding claims.

15. Support apparatus according to claim 14, **characterized in that** the support apparatus is a construction strut, in particular a heavy-load strut, or a supporting scaffold, in particular in the form of a support tower.

16. Ceiling formwork (70) comprising a lowering device (10) according to any of claims 1 to 13 and a form lining element (78), **characterized in that** the form lining element (78) is supported by means of the lowering device (10).

17. Ceiling formwork according to claim 16, **characterized in that** the form lining element (78) forms an underside of a carriageway slab (72), wherein the lowering device (10) is arranged on a support apparatus configured as a carriageway slab truss-out.

## Revendications

1. Système d'abaissement (10), comportant un piston de levage (14), une base d'appui (18) et comportant un dispositif d'arrêt, le piston de levage (14) étant monté de manière coulissable dans la base d'appui (13) et pouvant être coulissé d'une position de travail sortie dans une position abaissée et arrêté dans la position de travail sortie au moyen du dispositif d'arrêt, le dispositif d'arrêt présentant un palier de rotation (28) et un levier excentrique (16), le levier excentrique (16) étant fixé de manière rotative dans le palier de rotation (28) et le piston de levage (14) et la base d'appui (18) dans la position de travail (cf. ci-dessus) étant appuyés l'un contre l'autre par le levier excentrique (16),
**caractérisé en ce qu'**un élément formant bielle (32) est fixé de manière mobile sur le levier excentrique (16), le piston de levage (14) étant relié de manière mobile à la base d'appui (18) par l'intermédiaire de l'élément formant bielle (32) et du levier excentrique (16).

2. Système d'abaissement selon la revendication 1, **caractérisé en ce que** le levier excentrique (16) est fixé de manière rotative à la base d'appui (18) par l'intermédiaire du palier de rotation (28).

3. Système d'abaissement selon l'une des revendications 1 ou 2, **caractérisé en ce qu'**un arbre d'appui (30) est monté dans le palier de rotation (28), le levier excentrique (16) formant un vilebrequin avec l'arbre d'appui (30).

4. Système d'abaissement selon l'une des revendications 1 à 3, **caractérisé en ce que** le dispositif d'arrêt présente un dispositif de retenue de levier excentrique (12, 64).

5. Système d'abaissement selon la revendication 4, **caractérisé en ce que** le dispositif de retenue de levier excentrique (12, 64) comprend un coulisseau (12) ou un boulon d'arrêt (64).

6. Système d'abaissement selon la revendication 5, **caractérisé en ce que** le coulisseau (12) présente une zone d'extrémité (48) en forme de coin pour faire tourner le levier excentrique (16) dans le palier de rotation (28).

7. Système d'abaissement selon l'une des revendications 5 ou 6, **caractérisé en ce que** le dispositif de retenue de levier excentrique présente un ressort de rappel (44), le coulisseau (12) étant fixé à la base d'appui (18) au moyen du ressort de rappel (44).

8. Système d'abaissement selon l'une des revendications 5 à 7, **caractérisé en ce que** le coulisseau (12) présente un marquage visuel pour distinguer la position abaissée de la position de travail.

9. Système d'abaissement selon l'une des revendications 5 à 8, **caractérisé en ce que** le coulisseau (12) présente une rainure d'engagement d'outil (42).

10. Système d'abaissement selon la revendication 1, **caractérisé en ce que** le système d'abaissement présente un moyen d'actionnement (66), en particulier sous la forme d'une plaque de percussion accessible de l'extérieur, dont l'actionnement permet d'activer le système d'abaissement (10).

11. Système d'abaissement selon l'une des revendications précédentes, **caractérisé en ce que** la base d'appui (18) et/ou le piston de levage (14) forment à une extrémité une tête d'appui (20), la tête d'appui (20) présentant de préférence un galet (60).

12. Système d'abaissement selon la revendication 11, **caractérisé en ce que** des plots de butée (22) sont prévus à l'extrémité côté piston de levage de la base d'appui (18).

13. Système d'abaissement selon l'une des revendications précédentes, **caractérisé en ce que** la base d'appui (18) présente un ressort de poussée (50), le piston de levage (14) étant pressé en direction de la position de travail au moyen du ressort de poussée (50).

14. Dispositif d'étaiement (74) pour le domaine de la construction, présentant au moins un système d'abaissement (10) selon l'une des revendications précédentes.

15. Dispositif d'étaiement selon la revendication 15, **caractérisé en ce que** le dispositif d'étaiement est un étai de construction, en particulier un étai pour charges lourdes, ou un échafaudage, en particulier sous la forme d'une tour de support.

16. Coffrage de dalle (70) avec un système d'abaissement (10) selon l'une des revendications 1 à 13 et un élément de peau de coffrage (78), **caractérisé en ce que** l'élément de peau de coffrage (78) est soutenu au moyen du système d'abaissement (10).

17. Coffrage de dalle selon la revendication 16, **caractérisé en ce que** l'élément de peau de coffrage (78) forme une face inférieure d'un tablier (72), le système d'abaissement (10) étant disposé sur un dispositif d'étaiement réalisé sous la forme d'une console de tablier.
